# FASCICULE DE BREVET EUROPEEN

(11) **EP 3 409 942 B1**
(45) Date de publication et mention de la délivrance du brevet: **04.12.2019**
(21) Numéro de dépôt: 18174081.2
(22) Date de dépôt: 24.05.2018
(51) Int. Cl.: F03D 80/50, E04G 3/24, B62D 57/024, F03D 13/25, E02B 17/00

(54) **DISPOSITIF ET NAVIRE DE MAINTENANCE POUR ÉOLIENNE OFFSHORE**
WARTUNGSVORRICHTUNG UND -SCHIFF FÜR OFFSHORE-WINDKRAFTANLAGE
MAINTENANCE DEVICE AND VESSEL FOR OFFSHORE WIND TURBINE

(30) Priorité: 02.06.2017 FR 1754937
(43) Date de publication de la demande: 05.12.2018
(73) Titulaire: SAIPEM S.A., 78180 Montigny Le Bretonneux (FR)
(72) Inventeur: HUOT, Emmanuel, 28130 ST MARTIN DE NIGELLES (FR); CHIODINI, Carlo, 32044 PIEVE DI CADORE - BL (IT); MOCERI, Liborio, 78270 LOMMOYE (FR); SYLVESTRE, Romain, 78180 MONTIGNY-LE-BRETONNEUX (FR)
(74) Mandataire: Cabinet Beau de Loménie

(56) Documents cités:
- CN-A- 103 130 106
- DE-A1-102015 010 804
- DE-B3-102013 002 886
- KR-A- 20140 085 695

## Description

### Arrière-plan de l'invention

La présente invention concerne un dispositif de maintenance pour éolienne offshore apte à s'appliquer contre le mât de l'éolienne et se déplacer le long du mât de l'éolienne, ainsi qu'un procédé de maintenance à l'aide d'un navire de maintenance d'éolienne équipé d'un dispositif de maintenance pour éolienne offshore selon l'invention.

On entend ici par « éolienne offshore », une éolienne fixée dans le sol marin ou flottante en mer.

L'utilisation des moyens d'installation des éoliennes peut être étendue à leur phase de maintenance et les moyens techniques se distinguent selon que l'éolienne est fixe ou flottante :
Pour les éoliennes fixées dans le sol marin ou flottantes, une technologie existe qui est d'utiliser des barges auto-élévatrices ou bien semi-submersibles pour la maintenance. Cependant la disponibilité de ces moyens et/ou leur coût élevé de mobilisation constitue une limitation à leur mise en œuvre.

Le problème technique à résoudre est la manutention à des hauteurs de 100 à 150 mètres au-dessus de l'eau de partie de matériels de l'éolienne devant être démontées au sommet de l'éolienne, telles que le moyeu, une pale, un multiplicateur, un alternateur, ou une nacelle dont les poids peuvent varier de 5 à 150 tonnes selon la puissance de l'éolienne.

On connaît un système hydraulique pour coulisser le long du mât, dans CN202879746 ou des moyens nautiques de levage de composants d'éoliennes dans EP2319755, EP3019433 et EP2219986. DE102015010804 montre une plateforme de maintenance supportée et déplacée le long d'une tour d'éolienne par une pluralité de chenilles motorisées.

### Objet et résumé de l'invention

Un but de la présente invention est de fournir un dispositif de maintenance amélioré qui n'exige pas de moyen naval important type barge auto-élévatrice ou semi-submersible, mais puisse être mis en œuvre avec un simple navire de service, apte à être mobilisé rapidement.

Pour ce faire, la présente invention fournit, un dispositif de maintenance pour éolienne offshore apte à s'appliquer contre et se déplacer le long du mât de l'éolienne comprenant :
- une plateforme de maintenance comprenant une échancrure de préférence en forme de U, délimitant deux branches aptes à entourer le mât de l'éolienne, de sorte que le mât de l'éolienne puisse rentrer dans ladite échancrure avec l'axe longitudinal vertical du mât de l'éolienne perpendiculaire au plan de travail de la surface supérieure de ladite plateforme de maintenance, et
- des moyens de déplacement de ladite plateforme de maintenance le long du mât de l'éolienne dans la direction axiale longitudinale du mât de l'éolienne, comprenant une pluralité de chenilles motorisées disposées dessous ladite plateforme de maintenance de sorte que lorsque le mât de l'éolienne est disposé dans ladite échancrure avec l'axe longitudinal vertical du mât de l'éolienne perpendiculaire au plan de travail de ladite plateforme de maintenance, lesdites chenilles comprenant des patins soient aptes à s'appliquer en appui contre ledit mât de l'éolienne et se déplacer le long du mât de l'éolienne.

On comprend que la plateforme de maintenance et les deux branches qu'elle forme s'étendent dans un plan horizontal perpendiculaire à l'axe longitudinal vertical du mât de l'éolienne, lorsque le dispositif de maintenance est déplacé de sorte que le mât de l'éolienne puisse rentrer dans ladite échancrure.

Plus particulièrement, lesdites chenilles sont aptes à être actionnées
- soit en position de rapprochement relatif en section transversale dans un plan horizontal perpendiculaire à l'axe longitudinal vertical du mât de l'éolienne, pour créer un appui de tous les patins des dites chenilles contre ledit mât de l'éolienne pour permettre le déplacement en translation le long du mât ;
- soit en position de dégagement relatif en section transversale dans un plan horizontal perpendiculaire à l'axe longitudinal vertical du mât de l'éolienne, position dans laquelle une partie au moins des patins est déplacée par rapport aux autres, pour permettre l'approche ou l'éloignement du dispositif de maintenance par rapport au dit mât.

Plus particulièrement, lesdits moyens de déplacement de ladite plateforme de maintenance comprennent n=3 à 6 chenilles aptes à s'appliquer en appui contre ledit mât de l'éolienne en étant régulièrement espacées les unes des autres successivement, en section transversale dans un plan horizontal perpendiculaire à l'axe longitudinal vertical du mât de l'éolienne.

Plus particulièrement encore, une pluralité de dites chenilles sont supportées par au moins un ensemble d'une pluralité de n éléments de support de chenille supportant chacun respectivement une dite chenille, lesdits éléments de support de chenille étant reliés les uns aux autres successivement de façon articulée par des dispositifs d'articulation en rotation de type charnière selon un axe de rotation perpendiculaire au plan de travail de la plateforme de maintenance pour permettre d'entourer le mât de l'éolienne par lesdites chenilles sur une partie de la circonférence du mât de l'éolienne supérieure à une demi circonférence en section transversale lorsque lesdites chenilles sont appliquées en appui contre ledit mât.

On comprend que :
- les axes de rotation des dispositifs d'articulation en rotation de type charnière sont parallèles entre eux et parallèles à l'axe longitudinal vertical dudit mât lorsque le dispositif de maintenance est en position sur le mât, et
- lorsque les éléments support de chenilles sont articulés en rotation les uns par rapport aux autres en une position d'ouverture ou de dégagement, il est possible de déplacer le dispositif de maintenance en positionnant le mât dans ladite échancrure, puis d'appliquer les chenilles en appui contre le mât en articulant en rotation les éléments support de chenilles les uns par rapport aux autres en une position de fermeture, l'ensemble des chenilles en appui formant un clamp de serrage contre la mât.

Plus particulièrement encore, le dispositif de maintenance comprend une pluralité de p ensembles d'une pluralité de n éléments de support de chenille supportant chacun respectivement une dite chenille, lesdits p ensembles de dits éléments de support de chenilles ainsi que lesdits p dits éléments de support de chenilles supportant une même chenille étant espacés les uns des autres successivement dans la direction perpendiculaire au dit plan de travail de ladite plateforme de maintenance, p étant de préférence de un nombre entier 2 à 4. On comprend que :
- chaque chenille est supportée par une pluralité de p dits éléments de support de chenilles des respectivement p ensembles de dits éléments de support de chenilles, et
- lesdits p ensembles de dits éléments de support de chenilles ainsi que lesdits p dits éléments de support de chenilles supportant une même chenille sont espacés les uns au-dessus des autres successivement dans la direction longitudinale dudit mât lorsque lesdites chenilles sont appliquées en appui contre ladite périphérie dudit mât.

Plus particulièrement encore, lesdites chenilles comprennent ou sont aptes à coopérer avec des moyens d'appui autorisant un débattement radial différentié de ladite chenille sur la longueur permettant un appui et déplacement contre une périphérie de forme conique dudit mât de l'éolienne lorsqu'ils sont appliqués contre ledit mât.

On comprend que lesdits moyens d'appui des chenilles autorisent une inclinaison de ladite chenille sur la longueur par rapport à la verticale selon le même angle que le demi-angle au sommet du cône de la surface périphérique dudit mât.

Plus particulièrement encore, lesdits moyens d'appui autorisant un débattement radial différentié de ladite chenille sur la longueur comprennent une pluralité de p vérins montés sur p dits éléments de support de chenilles des respectivement p ensembles de dits éléments de support de chenilles, lesdits p vérins étant espacés les uns des autres successivement dans la direction longitudinale de ladite chenille.

Plus particulièrement encore, le dispositif de maintenance comprend des moyens de déplacement complémentaires comprenant des poulies, des câbles et dispositifs de treuils aptes à permettre le déplacement de ladite plateforme de maintenance le long du mât de l'éolienne dans la direction axiale longitudinale du mât de l'éolienne.

Plus particulièrement, une fois le dispositif de maintenance mis en place sur le mât de l'éolienne, il est sécurisé par des treuils à tension constante dont chaque câble passe dans une poulie de renvoi correspondante, préalablement fixée à la nacelle de l'éolienne. La plate-forme de maintenance se déplace en coopération avec les treuils à tension constante le long du mât de l'éolienne pour accéder aux pièces à démonter puis les retire pour les descendre le long du mât et les présenter au moyen naval de support pour manutention, stockage et transport.

Plus particulièrement encore, le dispositif de maintenance comprend des premiers moyens de préhension et transfert comprenant de préférence une première grue à bras articulé, disposés sur ladite plateforme de maintenance et aptes à assurer la préhension, le soulèvement et le déplacement d'une partie du matériel au sommet de ladite éolienne depuis le sommet de l'éolienne jusque sur ladite plateforme de maintenance lorsque le dispositif de maintenance se trouve en position haute contre le mât de l'éolienne.

La présente invention fournit également un navire de maintenance d'éolienne équipé d'un dispositif de maintenance pour éolienne offshore selon l'invention consistant de préférence en un simple navire de service apte à être mobilisé rapidement, ledit navire de maintenance comprenant en outre des deuxièmes moyens de préhension et transfert disposés sur le pont du navire et aptes à transférer le dispositif de maintenance depuis le pont du navire jusqu'en position basse d'un mât d'une éolienne offshore de sorte que le mât de l'éolienne puisse être positionné dans ladite échancrure avec l'axe longitudinal vertical du mât de l'éolienne perpendiculaire au plan de travail de la surface supérieure de ladite plateforme de maintenance, lorsque ledit navire se trouve à proximité de ladite éolienne.

Plus particulièrement, lesdits deuxièmes moyens de préhension et transfert du dispositif de maintenance comprennent ou coopèrent avec une plateforme de compensation de pilonnement apte à permettre de garder un niveau constant dans la direction verticale dudit dispositif de maintenance en cas de mouvement de pilonnement dudit navire lié aux mouvements de la mer.

Plus particulièrement encore, lesdits deuxièmes moyens de préhension et transfert comprennent des moyens de soulèvement, de préférence une grue à bras articulé actionnable par un vérin, lesdits moyens de soulèvement étant aptes à être déplacés en translation sur ladite plateforme de compensation sur laquelle ils reposent, ladite plateforme de compensation comprenant au moins une poutre de ripage et au moins deux vérins de compensation aptes à maintenir un niveau constant dans la direction verticale de ladite poutre de ripage en cas de mouvement de pilonnement dudit navire lié aux mouvements de la mer.

Plus particulièrement encore, le navire comprend en outre des troisièmes moyens de préhension et transfert, de préférence une grue à bras articulé, disposés sur le pont du navire et aptes à assurer la préhension, le soulèvement et le déplacement d'une partie du matériel de ladite éolienne à réparer ou remplacer depuis ladite plateforme de maintenance jusque sur le pont dudit navire de maintenance lorsque le dispositif de maintenance se trouve en position basse contre le mât de l'éolienne à proximité dudit navire.

La présente invention fournit également un procédé de maintenance d'une éolienne offshore à l'aide d'un navire de maintenance selon l'invention, caractérisé en ce qu'on réalise les étapes successives suivantes dans lesquelles :
a) on transfère ledit dispositif de maintenance depuis ledit navire de maintenance jusqu'au mât de l'éolienne de sorte que le mât de l'éolienne se retrouve positionné dans ladite échancrure entre lesdites deux branches avec l'axe longitudinal vertical du mât de l'éolienne perpendiculaire au plan de travail de la surface supérieure de ladite plateforme de maintenance, lesdites chenilles étant en position de dégagement dans laquelle une partie au moins des patins est déplacée par rapport aux autres, pour permettre l'approche et le positionnement du dispositif de maintenance par rapport au dit mât, et
b) on applique lesdites chenilles en appui contre ledit mât de l'éolienne,
c) on actionne lesdits moyens de déplacement de ladite plateforme de maintenance de manière à monter ladite plateforme de maintenance le long du mât de l'éolienne dans la direction axiale longitudinales du mât de l'éolienne vers le sommet de l'éolienne, et
d) on réalise la maintenance de l'éolienne depuis ladite plateforme de maintenance, et
e) on actionne lesdits moyens de déplacement de manière à redescendre ladite plateforme de maintenance le long du mât de l'éolienne dans la direction axiale longitudinale du mât de l'éolienne vers le bas de l'éolienne, et
f) on transfère ladite partie du matériel de l'éolienne depuis ladite plateforme de maintenance jusque sur le pont d'un navire, de préférence le pont dudit navire de maintenance, lorsque le dispositif de maintenance se trouve en position basse contre le mât de l'éolienne à proximité dudit navire de maintenance, et
g) on actionne lesdites chenilles depuis leur position en appui contre ledit mât de l'éolienne vers une position de dégagement dans laquelle une partie au moins des patins est déplacé par rapport aux autres, pour permettre l'éloignement du dispositif de maintenance par rapport au dit mât.

Plus particulièrement, le procédé selon l'invention comprend les caractéristiques selon lesquelles:
- à l'étape a), le dispositif de maintenance est soulevé et déplacé en translation à l'aide de deuxièmes moyens de préhension et transfert comprenant des moyens de soulèvement, de préférence une grue à bras articulé actionnable par un vérin, lesdits moyens de soulèvement étant déplacés en translation sur une plateforme de compensation sur laquelle ils reposent, ladite plateforme de compensation comprenant au moins une poutre de ripage et au moins deux vérins de compensation aptes à maintenir un niveau constant de ladite poutre de ripage dans la direction verticale en cas de mouvement de pilonnement dudit navire lié aux mouvements de la mer, et
- à l'étape b), lesdites chenilles sont actionnées depuis une position de dégagement vers une position de rapprochement relatif en section transversale dans un plan horizontal perpendiculaire à l'axe longitudinal vertical du mât de l'éolienne, pour créer un appui de tous les patins des dites chenilles contre ledit mât de l'éolienne pour permettre le déplacement en translation le long du mât une fois la rotation des chenilles actionnées à l'étape c);
- à l'étape d), on dépose sur ladite plateforme de maintenance, une partie du matériel au sommet de ladite éolienne pour la réparer ou remplacer, de préférence à l'aide de premiers moyens de préhension et transfert disposés sur ladite plateforme de maintenance, lorsque le dispositif de maintenance se trouve en position haute contre le mât de l'éolienne, et
- à l'étape f), on transfère ladite partie du matériel de l'éolienne depuis ladite plateforme de maintenance jusque sur le pont d'un navire, de préférence le pont dudit navire de maintenance, à l'aide de troisièmes moyens de préhension et transfert, de préférence une grue à bras articulé, disposés sur le pont dudit navire, et
- à l'étape g), on actionne lesdites chenilles en position de dégagement relatif en section transversale dans un plan horizontal perpendiculaire à l'axe longitudinal vertical du mât de l'éolienne, position de dégagement dans laquelle une partie au moins des patins est déplacé par rapport aux autres, pour permettre l'éloignement du dispositif de maintenance par rapport au dit mât.

Plus particulièrement, ladite partie du matériel au sommet de ladite éolienne est choisie parmi une pale, une pièce mécanique d'actionnement en rotation des pales telle que rotor, générateur électrique et nacelle.

### Brève description des dessins

D'autres caractéristiques et avantages de la présente invention ressortiront mieux à la lecture de la description qui va suivre, faite de manière illustrative et non limitative, en référence aux dessins annexés sur lesquels :
Les figures 1A et 1B représentent des vue de côté (figure 1A) et vue de dessus (figure 1B) d'un dispositif de maintenance 1 selon l'invention.
La figure 1C représente une variante allégée de réalisation d'un dispositif de maintenance 1 selon l'invention en vue de dessus.
Les figures 2A et 2B représentent en vue de côté et en vue de dessus un dispositif de maintenance selon l'invention soulevé par des moyens de préhension et de transfert 5 reposant sur une plateforme de compensation de pilonnement 6 au-dessus du pont du navire.
Les figures 3A et 3B représentent le dispositif de maintenance selon l'invention 1 en position de soulèvement par les moyens de préhension et transfert 5 avant translation sur une poutre de ripage 6a1 (figure 3A) et après translation sur la poutre de ripage (figure 3B).
Les figures 4A et 4B représentent le dispositif de maintenance 1 positionné avec le mât 10a de l'éolienne dans l'axe de l'échancrure 2a de la plateforme de maintenance 2.
Les figures 5A et 5B représentent les ensembles 31 d'éléments de support de chenille 31-1 à 31-6 en position de dégagement (figure 5A) autour du mât 10a de l'éolienne, et en position d'appui des chenilles 30 contre le mât 10a de l'éolienne (figure 5B).
La figure 6 représente en vue en coupe longitudinale verticale deux chenilles appliquées, de façon diamétralement opposée, sur un mât 10a de l'éolienne de forme tronconique à deux positions différentes en déplacement longitudinal le long de l'axe XX' dudit mât.
Les figures 7A à 7D représentent différentes positions du dispositif de maintenance 1 le long du mât 10a de l'éolienne, pour réaliser la dépose d'une pale 10c en vue de sa maintenance sur le navire de maintenance 100.
Les figures 8A à 8C représentent différentes étapes de dépose du rotor 10d au sommet de l'éolienne pour sa réparation ou maintenance sur le pont du navire.
Les figures 9A et 9B représentent différentes étapes de dépose et transfert sur le pont du navire du générateur 10e dans la nacelle 10b au sommet de l'éolienne.

### Description détaillée

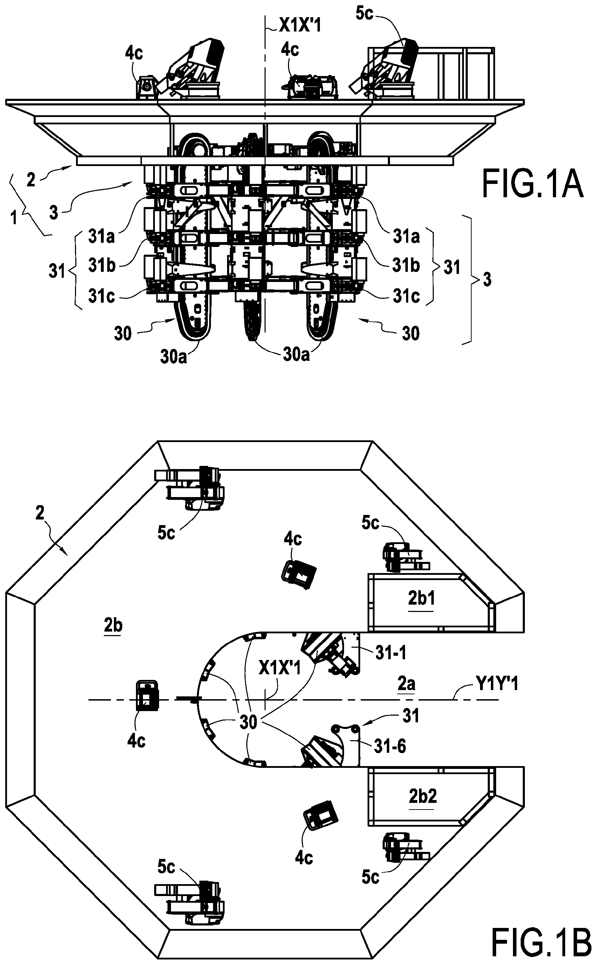

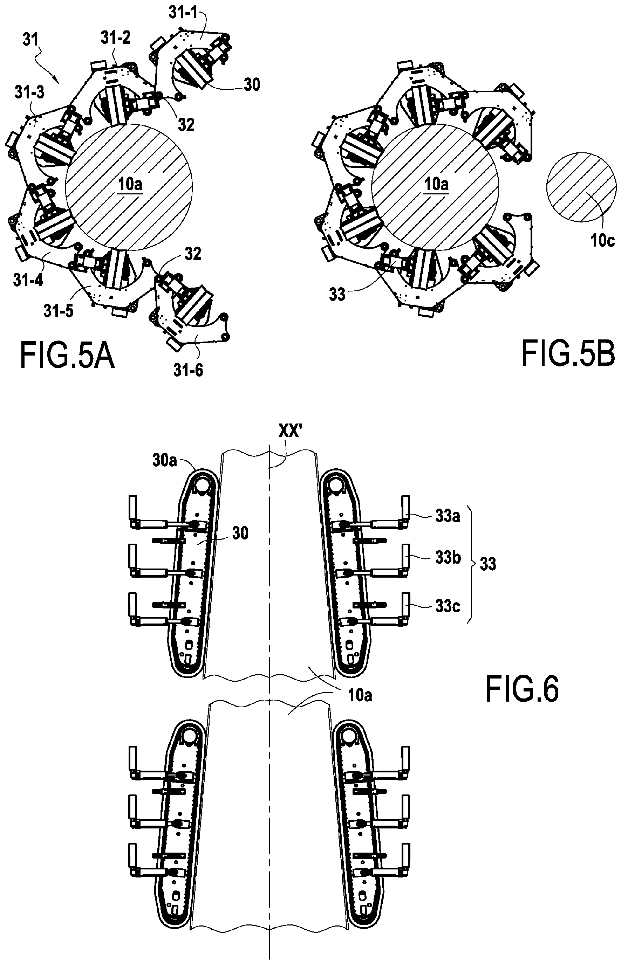

Sur les figures 1A, 1B, 4B et 5A, 5B ainsi que la figure 6 sont représentés un dispositif de maintenance 1 selon l'invention comprenant une plateforme 2, dont le plan de travail supérieur 2b a un contour octogonal, dont un des côtés est échancré par une échancrure latérale 2a, qui se termine par un contour interne de forme semi-circulaire autour de l'axe vertical X1X1' de la plateforme, l'axe X1X1' étant destiné à coïncider avec l'axe XX' du mât 10a d'une éolienne 10, lorsque ladite plateforme est en position autour dudit mât comme décrit ci-après. L'échancrure latérale 2a forme deux branches 2b1, 2b2 dans le plan de travail 2b de la plateforme 2 disposées symétriquement de part et d'autre de l'axe Y1Y1' perpendiculaire à X1X1'.

La plateforme de maintenance 2 supporte différents équipements tel que des treuils et/ou outils 4c, 5c et une première grue à bras articulé 4-1 tel que décrit ci-après.

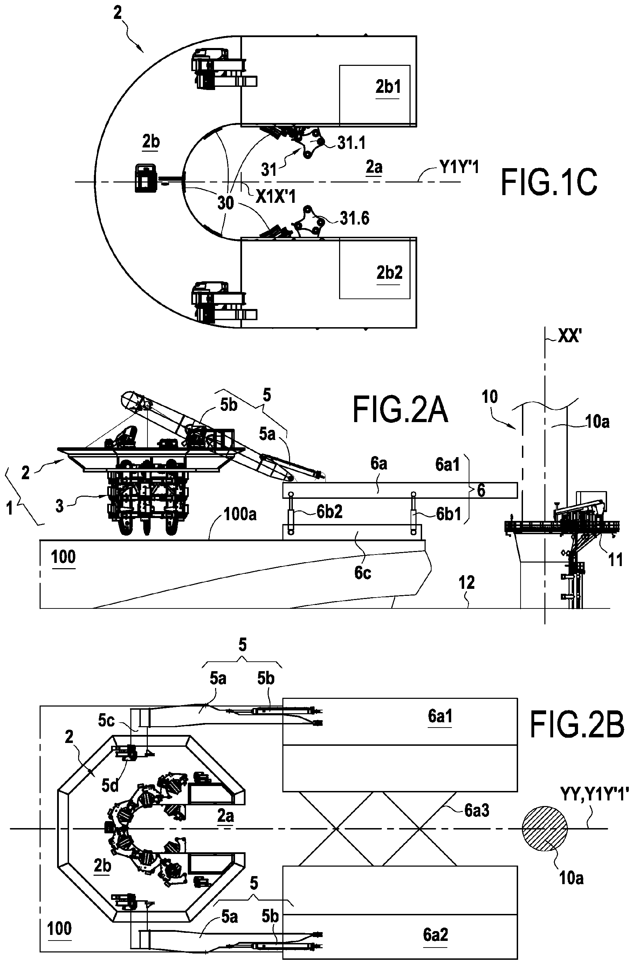

Sur la figure 1C, on a représenté une version simplifiée du dispositif de maintenance, dans lequel la plateforme de maintenance présente un plan de travail 2b en forme de U avec une partie semi-circulaire qui se prolonge par deux branches latérales rectangulaires 2b1, 2b2 délimitant l'échancrure 2a.

En sous-face de la plateforme 2 se trouvent les moyens de déplacement motorisé 3, constitués par un ensemble de six chenilles 30, supporté par un groupe 31 de trois ensembles de supports de chenilles superposés 31a, 31b, 31c, espacés les uns des autres dans la direction axiale X1X1' le long desdites chenilles 30. Chaque ensemble 31a, 31b et 31c est constitué de six éléments de support de chenilles 31-1 à 31-6, reliés les uns aux autres successivement par des dispositifs d'articulation 32 de type charnière selon un axe de rotation perpendiculaire au plan de travail 2b et donc parallèle à l'axe longitudinal X1X1'. Une articulation en rotation est requise au moins au niveau de deux éléments de support de chenilles d'extrémités 31-1 et 31-6 qui peuvent adopter :
- une position d'ouverture ou de dégagement tel que montré figure 5A qui autorise à déplacer en translation le dispositif de maintenance 1 en positionnant le mât 10a dans ladite échancrure 2a coaxialement à celle-ci, tel que les patins 30a des chenilles 30 supporté par les autres éléments de chenilles 31-2 à 31-5 en appui sur une partie de la circonférence du mât ou pylône 10a, recouvrant une partie de la circonférence dudit pylône inférieure à une demi-circonférence dudit pylône, et
- une position de fermeture ou d'appui par laquelle les deux éléments de support de chenilles d'extrémités 31-1 et 31-6 sont actionnés en rotation de manière à ce que les patins 30a des chenilles 30 qu'ils supportent viennent également en appui contre la circonférence du pylône 10a, tel que l'ensemble des chenilles constitue un clamp de serrage contre le mât 10a, lesdites chenilles recouvrant une partie de la circonférence du mât supérieure à une demi-circonférence en direction transversale, lorsque lesdites chenilles sont appliquées en appui contre ledit mât.

Sur la figure 6, on montre que les éléments de support de chenilles 31-1 à 31-6 supportent également des vérins 33a à 33c constituant des moyens d'appui autorisant un débattement radial différencié de chaque dite chenille sur leur longueur, autorisant une inclinaison desdites chenilles sur leur longueur par rapport à l'axe XX' dudit mât et permettant un appui et déplacement des patins 30a des chenilles contre la périphérie de mât de forme conique.

Sur la figure 6, chacune des chenilles coopère avec une pluralité de six vérins 33a, six vérins 33b, six vérins 33c, supporté par les six éléments support de chenilles 31-1, 31-6 de chacun des trois ensembles superposés d'éléments de support de chenilles 31a-31c.

Lorsque tous les patins 30a des chenilles 30 sont en appui contre le mât 10a, on peut déplacer le dispositif de maintenance 1 en actionnant la motorisation de la rotation des patins desdites chenilles pour leur déplacement longitudinal le long du mât.

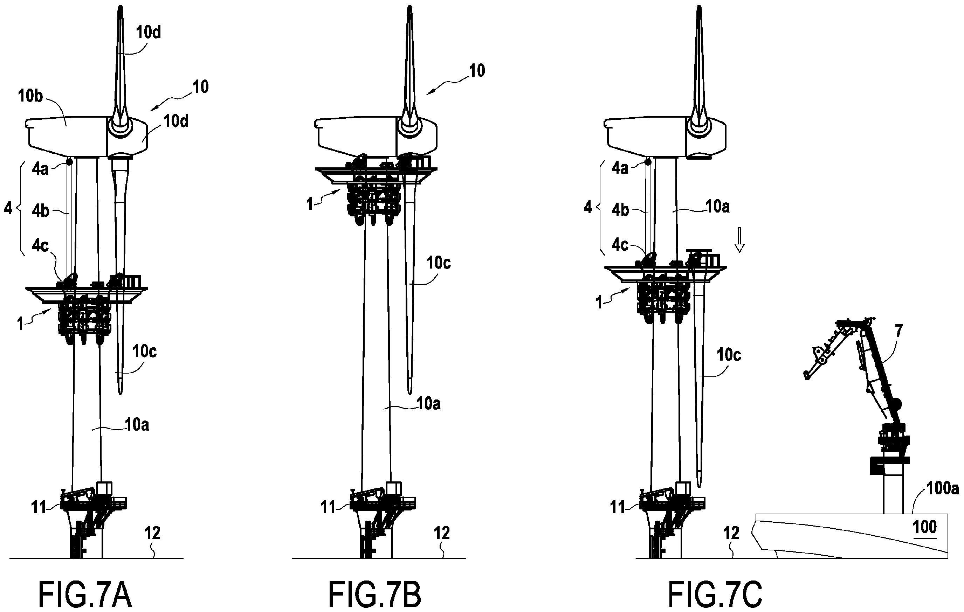

La plateforme de maintenance 2 supporte les treuils 4c, qui permettent à l'aide de câbles 4b passant dans des poulies de renvoi 4a montées en sous-face de la nacelle 10b au sommet de l'éolienne de déplacer le dispositif de maintenance 1 le long du mât et constituer des moyens de déplacement complémentaires 4, sécurisant les moyens de déplacement principaux 3. Pour la mise en place des poulies de renvoi 4a en sous-face de la nacelle 10b, on monte le dispositif de maintenance 1 au sommet de l'éolienne et on fait passer le câble 4b autour de la poulie de renvoi 4a, comme montré figure 7A.

Sur les figures 2 à 4, on montre un navire de maintenance 100 à proximité d'une éolienne 10 équipée d'une plateforme périphérique de travail inférieure 11, située au-dessus du niveau de la mer 12. Le pont 100a du navire de maintenance 100 supporte une plateforme de compensation de pilonnement 6, comprenant deux poutres de ripage 6a1, 6a2 parallèles reliées entre elles par une armature 6a3 et disposées symétriquement par rapport à l'axe YY' du navire 100. Chaque poutre de ripage 6a1, 6a2 est supportée par deux vérins 6b1, 6b2 espacés dans la direction longitudinale YY' des deux poutres. Les vérins 6b1, 6b2 sont supportés à leurs extrémités inférieures par une poutre 6c reposant sur le pont 100a et les extrémités supérieures des vérins 6b1 et 6b2 coopèrent avec chaque poutre de ripage 6a1, 6a2, disposées parallèlement côte à côte.

Chaque poutre de ripage 6a1, 6a2 supporte une grue 5 consistant en un bras 5b articulé par un vérin 5a, les deux grues 5 étant aptes à soulever le dispositif de maintenance 1 à l'aide de câbles 5c coopérant avec des treuils 5c sur le plan de travail 2 lorsque le dispositif de maintenance 1 est disposé avec l'axe Y1Y1' de l'échancrure 2a en coïncidence avec l'axe YY' du navire par rapport auquel les deux poutres de ripage sont disposées symétriquement.

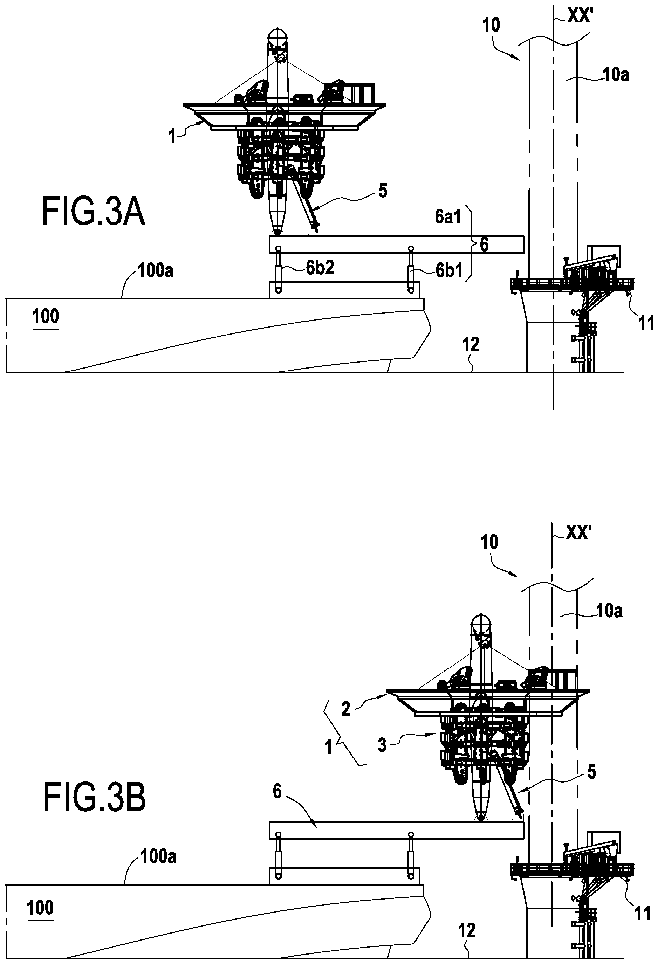

Sur la figure 3A, on a représenté le soulèvement du dispositif de maintenance 1 à l'aide des moyens de préhension et de transfert 5 avant leur translation sur les poutres de ripage 6a1, 6a2 jusqu'à l'extrémité des poutres pour arriver à proximité du mât 10a de l'éolienne comme représenté sur la figure 3B.

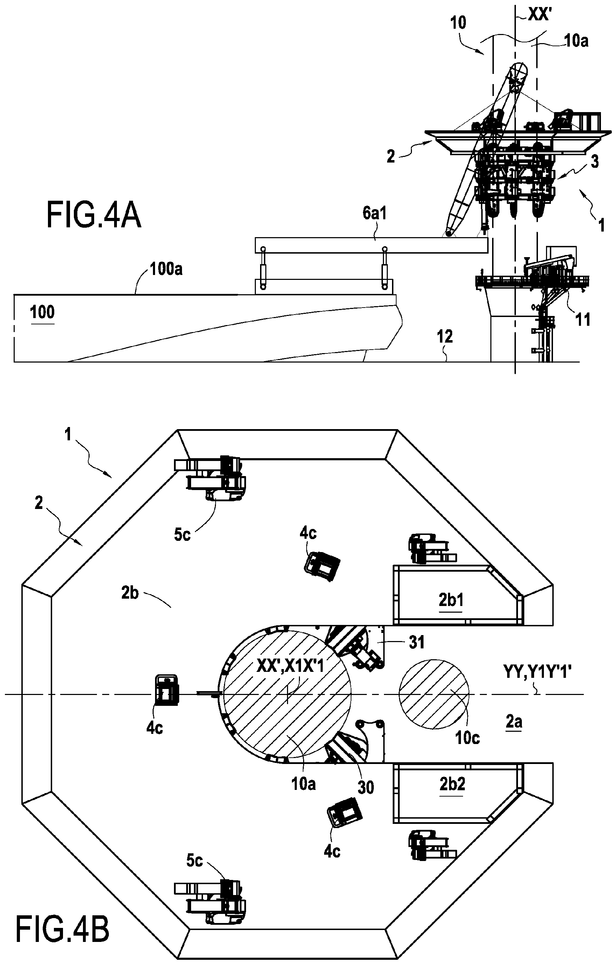

Sur la figure 4A, on incline à nouveau la grue 5 de manière à positionner l'axe XX' du mât 10a coaxialement dans l'axe X1X1' de la terminaison semi circulaire de l'échancrure 2a, les chenilles étant en position d'ouverture comme représenté figure 5A. Puis, on actionne en position de fermeture et jusqu'en appui contre le mât 10a lesdites chenilles 30 comme représenté figure 5B et figure 4B.

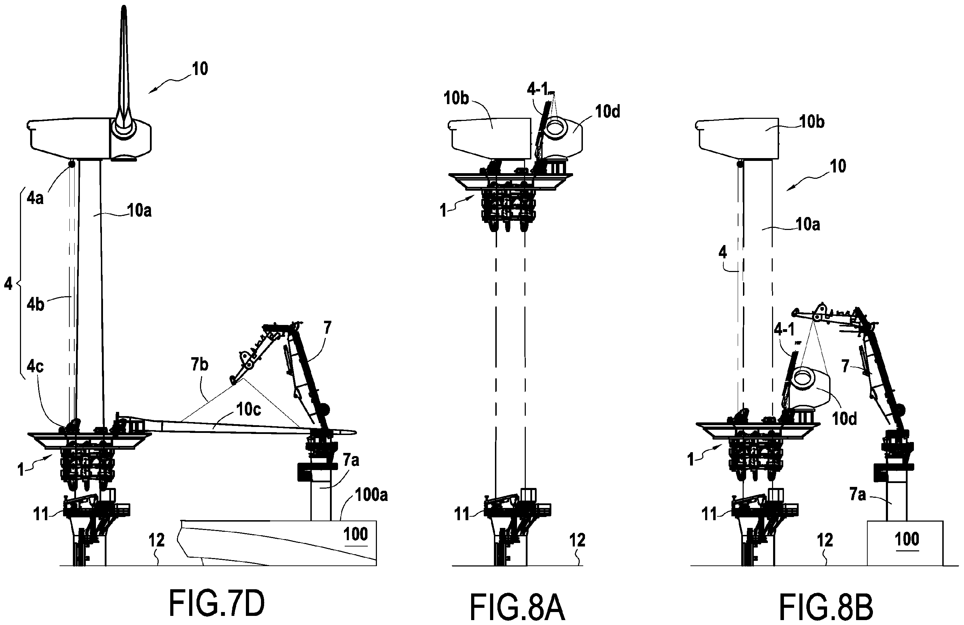

Sur la figure 7A, on montre le déplacement du dispositif de maintenance 1 vers le sommet du mât de l'éolienne. Sur les figures 7B et 7C, on montre la dépose puis la descente de la pale 10e de l'éolienne sur la plateforme 2 du dispositif de maintenance 1. Et, sur la figure 7D, on montre la préhension et le transfert de la pale 10c suspendue à une élingue 7b à l'aide d'une grue 7 au sommet d'un poteau 7a sur le pont 100a du navire 100 depuis la plateforme de maintenance 2 située au pont 100a du navire.

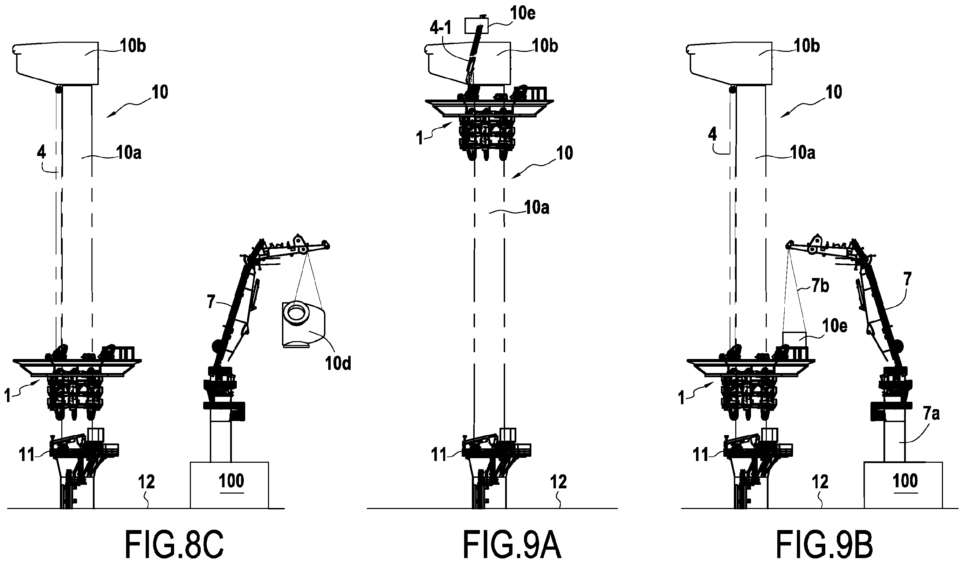

Sur les figures 8A à 8C, on a représenté :
- la préhension et le transfert du rotor 10d du sommet de l'éolienne à l'aide d'une grue 4-1 disposée sur la plateforme 2, lorsque le dispositif de maintenance 1 est au sommet du mât 10a, puis,
- la préhension et le transfert du rotor 10d à l'aide de la grue 7 sur le pont du navire 100, lorsque le dispositif de maintenance est redescendu en bas du mât 10a.

Les mêmes opérations sont effectuées à l'aide des grues 4-1 et 7 pour récupérer et assurer la maintenance du générateur 10e de l'éolienne sur les figures 9A et 9B.

Sur les figures 7C, 7D, 8C et 9B, le navire 100 à qui le dispositif de maintenance vient transférer les pièces d'équipement de l'éolienne, rotor, générateur, nacelle, n'est pas nécessairement le navire 100 qui a transféré le dispositif de maintenance sur le mât de l'éolienne. Il peut s'agir d'un deuxième navire muni d'un dispositif de préhension 7, qui peut être toutefois de préférence le navire de maintenance 100.

Un procédé de maintenance pour éolienne offshore 10 à l'aide d'un navire de maintenance 100 selon l'invention comprend des étapes successives suivantes.
a) On transfère ledit dispositif de maintenance 1 depuis ledit navire de maintenance jusqu'au mât de l'éolienne 10a de sorte que le mât de l'éolienne se retrouve positionné dans ladite échancrure 2a entre lesdites deux branches 2a1, 2a2 avec l'axe longitudinal vertical XX' du mât de l'éolienne dans l'axe X1X1' de la surface supérieure de ladite plateforme de maintenance, lesdites chenilles 30 étant en position de dégagement dans laquelle les deux patins 30a des chenilles supportées par les éléments support d'extrémité 31-1 et 31-6 sont actionnés en rotation en position ouverte par rapport aux autres, pour permettre l'approche et le positionnement du dispositif de maintenance par rapport au dit mât.

Pour ce faire, le dispositif de maintenance 1 est préalablement soulevé au-dessus du pont 100a par un câble 5c à l'aide d'une grue à bras articulé 5a actionnable par un vérin 5b. Ladite grue 5 soulevant le dispositif de maintenance 1 est déplacée en translation sur les deux poutres de ripage 6a1, 6a2 supportée chacune par les deux vérins 6b1, 6b2 de manière à former une plateforme de compensation 6 apte à maintenir un niveau constant dans la direction verticale de ladite poutre de ripage en cas de mouvement de pilonnement dudit navire lié aux mouvements de la mer.
b) On applique lesdites chenilles 30 supportées par les éléments support d'extrémité 31-1 et 31-6 en appui contre ledit mât de l'éolienne.
c) On actionne lesdits moyens de déplacement 3 de ladite plateforme de maintenance de manière à monter ladite plateforme de maintenance 2 le long du mât 10a de l'éolienne dans la direction axiale longitudinale XX' du mât de l'éolienne vers le sommet de l'éolienne.
d) On dépose sur ladite plateforme de maintenance, une partie du matériel 10c-10e au sommet de ladite éolienne pour la réparer ou remplacer, à l'aide d'une grue à bras articulé 4-1 disposée sur ladite plateforme de maintenance 2, lorsque le dispositif de maintenance 1 se trouve en position haute contre le mât de l'éolienne 10a.
e) On actionne lesdits moyens de déplacement 3 de manière à redescendre ladite plateforme de maintenance 2 le long du mât 10a de l'éolienne dans la direction axiale longitudinale (XX') du mât de l'éolienne vers le bas de l'éolienne.
f) On transfère ladite partie du matériel 10c-10e de l'éolienne depuis ladite plateforme de maintenance 2 jusque sur le pont 100a dudit navire de maintenance 100, lorsque le dispositif de maintenance 1 se trouve en position basse contre le mât de l'éolienne 10a à proximité dudit navire de maintenance 100, à l'aide d'une grue à bras articulé 7 disposée sur le pont du navire.
g) On actionne lesdites chenilles 30 depuis leur position en appui contre ledit mât de l'éolienne vers une position de dégagement dans laquelle les chenilles supportées par les éléments support d'extrémité 31-1 et 31-6 sont déplacés par rapport aux autres en position de dégagement ou ouverture, pour permettre l'éloignement du navire de maintenance et du dispositif de maintenance pris en charge par la grue 5 sur le navire 100 par rapport au dit mât.

Plus particulièrement, l'ensemble de l'outil de déplacement du dispositif de maintenance est constitué de quatre à six trains de chenilles, équipés de patins et est capable de reprendre un effort de 2750 à 3000 kN dans l'axe du mât. La vitesse requise est faible et la puissance demandée reste raisonnable, environ 200 kW.

## Revendications

1. Dispositif de maintenance (1) pour éolienne offshore (10) apte à s'appliquer contre et se déplacer le long du mât (10a) de l'éolienne comprenant :
- une plateforme de maintenance (2) comprenant une échancrure (2a) de préférence en forme de U, délimitant deux branches (2a1, 2a2) aptes à entourer le mât de l'éolienne (10), de sorte que le mât de l'éolienne (10) puisse rentrer dans ladite échancrure (2a) avec l'axe longitudinal vertical (XX') du mât de l'éolienne perpendiculaire au plan de travail (2) de la surface supérieure de ladite plateforme de maintenance, et
- des moyens de déplacement (3) de ladite plateforme de maintenance (2) le long du mât de l'éolienne (10a) dans la direction axiale longitudinale (XX') du mât de l'éolienne, comprenant une pluralité de chenilles motorisées (30) disposées dessous ladite plateforme de maintenance de sorte que lorsque le mât de l'éolienne est disposé dans ladite échancrure avec l'axe longitudinal vertical du mât de l'éolienne perpendiculaire au plan de travail (2b) de ladite plateforme de maintenance, lesdites chenilles (30) comprenant des patins (30a) soient aptes à s'appliquer en appui contre ledit mât de l'éolienne et se déplacer le long du mât de l'éolienne.

2. Dispositif de maintenance (1) pour éolienne offshore (10) selon la revendication 1, **caractérisé en ce que** lesdits moyens de déplacement (3) de ladite plateforme de maintenance comprennent n=3 à 6 chenilles (30) aptes à s'appliquer en appui contre ledit mât de l'éolienne en étant régulièrement espacées les unes des autres successivement, en section transversale dans un plan horizontal perpendiculaire à l'axe longitudinal vertical (XX') du mât de l'éolienne.

3. Dispositif de maintenance (1) pour éolienne offshore (10) selon l'une des revendications 1 ou 2, **caractérisé en ce qu'**une pluralité de dites chenilles sont supportées par au moins un ensemble (31) d'une pluralité de n éléments de support de chenille (31-1 - 31-6) supportant chacun respectivement une dite chenille (30), lesdits éléments de support de chenille (31-1 - 31-6) étant reliés les uns aux autres successivement de façon articulée par des dispositifs d'articulation en rotation de type charnière (32) selon un axe de rotation perpendiculaire au plan de travail (2b) de la plateforme de maintenance pour permettre d'entourer le mât de l'éolienne par lesdites chenilles sur une partie de la circonférence du mât de l'éolienne supérieure à une demi circonférence en section transversale lorsque lesdites chenilles sont appliquées en appui contre ledit mât.

4. Dispositif de maintenance (1) pour éolienne offshore (10) selon l'une des revendications 1 à 3, **caractérisé en ce qu'**il comprend une pluralité de p ensembles (31, 31a-31c) d'une pluralité de n éléments de support de chenille (31-1 - 31-6) supportant chacun respectivement une dite chenille (30), lesdits p ensembles (31, 31a-31c) de dits éléments de support de chenilles ainsi que lesdits p dits éléments de support de chenilles supportant une même chenille étant espacés les uns des autres successivement dans la direction perpendiculaire au dit plan de travail (2b) de ladite plateforme de maintenance (2), p étant de préférence de un nombre entier 2 à 4.

5. Dispositif de maintenance (1) pour éolienne offshore (10) selon l'une des revendications 1 à 4, **caractérisé en ce que** lesdites chenilles (30) comprennent ou sont aptes à coopérer avec des moyens d'appui (33, 33a-33c) autorisant un débattement radial différentié de ladite chenille sur la longueur permettant un appui et déplacement contre une périphérie de forme conique dudit mât de l'éolienne lorsqu'ils sont appliqués contre ledit mât.

6. Dispositif de maintenance (1) pour éolienne offshore (10) selon la revendication 5, **caractérisé en ce que** lesdits moyens d'appui (33, 33a-33c) autorisant un débattement radial différentié de ladite chenille sur la longueur comprennent une pluralité de p vérins montés sur p dits éléments de support de chenilles des respectivement p ensembles (31, 31a-31c) de dits éléments de support de chenilles, lesdits p vérins étant espacés les uns des autres successivement dans la direction longitudinale de ladite chenille.

7. Dispositif de maintenance (1) pour éolienne offshore (10) selon l'une des revendications 1 à 6, **caractérisé en ce qu'**il comprend des moyens de déplacement complémentaires (4) comprenant des poulies (4a), des câbles (4b) et dispositifs de treuils (4c) aptes à permettre le déplacement de ladite plateforme de maintenance le long du mât de l'éolienne (10a) dans la direction axiale longitudinale (XX') du mât de l'éolienne.

8. Dispositif de maintenance (1) pour éolienne offshore (10) selon l'une des revendications 1 à 6, **caractérisé en ce qu'**il comprend des premiers moyens de préhension et transfert (4-1) comprenant de préférence une première grue à bras articulé, disposés sur ladite plateforme de maintenance (2) et aptes à assurer la préhension, le soulèvement et le déplacement d'une partie du matériel (10c-10e) au sommet de ladite éolienne depuis le sommet de l'éolienne jusque sur ladite plateforme de maintenance lorsque le dispositif de maintenance (1) se trouve en position haute contre le mât de l'éolienne (10a).

9. Navire (100) de maintenance d'éolienne équipé d'un dispositif de maintenance (1) pour éolienne offshore (10) selon l'une des revendications 1 à 8, consistant de préférence en un simple navire de service apte à être mobilisé rapidement, ledit navire de maintenance **caractérisé en ce qu'**il comprend en outre des deuxièmes moyens de préhension et transfert (5) disposés sur le pont (100a) du navire et aptes à transférer le dispositif de maintenance (1) depuis le pont du navire jusqu'en position basse d'un mât d'une éolienne offshore de sorte que le mât de l'éolienne (10a) puisse être positionné dans ladite échancrure (2a) avec l'axe longitudinal vertical du mât de l'éolienne perpendiculaire au plan de travail (2b) de la surface supérieure de ladite plateforme de maintenance, lorsque ledit navire se trouve à proximité de ladite éolienne.

10. Navire de maintenance selon la revendication 9, **caractérisé en ce que** lesdits deuxièmes moyens de préhension et transfert (5) du dispositif de maintenance comprennent ou coopèrent avec une plateforme de compensation de pilonnement (6) apte à permettre de garder un niveau constant dans la direction verticale dudit dispositif de maintenance (1) en cas de mouvement de pilonnement dudit navire lié aux mouvements de la mer.

11. Navire de maintenance d'éolienne selon la revendication 10, **caractérisé en ce que** lesdits deuxièmes moyens de préhension et transfert (5) comprennent des moyens de soulèvement (5a-5b), de préférence une grue à bras articulé (5a) actionnable par un vérin (5b), lesdits moyens de soulèvement étant aptes à être déplacés en translation sur ladite plateforme de compensation (6) sur laquelle ils reposent, ladite plateforme de compensation comprenant au moins une poutre de ripage (6a1, 6a2) et au moins deux vérins de compensation (6b1, 6b2) aptes à maintenir un niveau constant dans la direction verticale de ladite poutre de ripage en cas de mouvement de pilonnement dudit navire lié aux mouvements de la mer.

12. Navire de maintenance d'éolienne selon l'une des revendications 9 à 11, **caractérisé en ce qu'**il comprend en outre des troisièmes moyens de préhension et transfert (7), de préférence une grue à bras articulé, disposés sur le pont du navire et aptes à assurer la préhension, le soulèvement et le déplacement d'une partie du matériel (10c-10e) de ladite éolienne à réparer ou remplacer depuis ladite plateforme de maintenance jusque sur le pont (100a) dudit navire de maintenance lorsque le dispositif de maintenance se trouve en position basse contre le mât de l'éolienne à proximité dudit navire.

13. Procédé de maintenance d'une éolienne offshore (10) à l'aide d'un navire de maintenance (100) selon l'une des revendications 9 à 12, **caractérisé en ce qu'**on réalise les étapes successives suivantes dans lesquelles :
a) on transfère ledit dispositif de maintenance (1) depuis ledit navire de maintenance jusqu'au mât de l'éolienne (10a) de sorte que le mât de l'éolienne se retrouve positionné dans ladite échancrure (2a) entre lesdites deux branches (2a1, 2a2) avec l'axe longitudinal vertical du mât de l'éolienne perpendiculaire au plan de travail (2b) de la surface supérieure de ladite plateforme de maintenance, lesdites chenilles (30) étant en position de dégagement dans laquelle une partie au moins des patins (30a) est déplacé par rapport aux autres, pour permettre l'approche et le positionnement du dispositif de maintenance par rapport au dit mât, et
b) on applique lesdites chenilles (30) en appui contre ledit mât de l'éolienne, et
c) on actionne lesdits moyens de déplacement (3) de ladite plateforme de maintenance de manière à monter ladite plateforme de maintenance (2) le long du mât de l'éolienne (10a) dans la direction axiale longitudinales (XX') du mât de l'éolienne vers le sommet de l'éolienne, et
d) on réalise la maintenance de l'éolienne depuis ladite plateforme de maintenance, et
e) on actionne lesdits moyens de déplacement (3) de manière à redescendre ladite plateforme de maintenance (2) le long du mât de l'éolienne (10a) dans la direction axiale longitudinale (XX') du mât de l'éolienne vers le bas de l'éolienne, et
f) on transfère ladite partie du matériel (10c-10e) de l'éolienne depuis ladite plateforme de maintenance (2) jusque sur le pont d'un navire, de préférence le pont (100a) dudit navire de maintenance (100), lorsque le dispositif de maintenance (1) se trouve en position basse contre le mât de l'éolienne (10a) à proximité dudit navire de maintenance (100), et
g) on actionne lesdites chenilles (30) depuis leur position en appui contre ledit mât de l'éolienne vers une position de dégagement dans laquelle une partie au moins des patins est déplacé par rapport aux autres, pour permettre l'éloignement du dispositif de maintenance par rapport au dit mât.

14. Procédé selon la revendication 13, **caractérisé en ce que** :
- à l'étape a), le dispositif de maintenance est soulevé et déplacé en translation à l'aide de deuxièmes moyens de préhension et transfert (5) comprenant des moyens de soulèvement (5a-5b), de préférence une grue à bras articulé (5a) actionnable par un vérin (5b), lesdits moyens de soulèvement étant déplacés en translation sur une plateforme de compensation (6) sur laquelle ils reposent, ladite plateforme de compensation comprenant au moins une poutre de ripage (6a1, 6a2) et au moins deux vérins de compensation (6b1, 6b2) aptes à maintenir un niveau constant dans la direction verticale de ladite poutre de ripage en cas de mouvement de pilonnement dudit navire lié aux mouvements de la mer, et
- à l'étape b), lesdites chenilles sont actionnées depuis une position de dégagement vers une position de rapprochement relatif en section transversale dans un plan horizontal perpendiculaire à l'axe longitudinal vertical du mât de l'éolienne, pour créer un appui de tous les patins (30a) des dites chenilles contre ledit mât de l'éolienne pour permettre le déplacement en translation le long du mât une fois la rotation des chenilles actionnées à l'étape c);
- à l'étape d), on dépose sur ladite plateforme de maintenance, une partie du matériel (10c-10e) au sommet de ladite éolienne pour la réparer ou remplacer, de préférence à l'aide de premiers moyens de préhension et transfert (4-1) disposés sur ladite plateforme de maintenance (2), lorsque le dispositif de maintenance (1) se trouve en position haute contre le mât de l'éolienne (10a), et
- à l'étape f), on transfère ladite partie du matériel (10c-10e) de l'éolienne depuis ladite plateforme de maintenance (2) jusque sur le pont d'un navire, de préférence le pont (100a) dudit navire de maintenance (100), à l'aide de troisièmes moyens de préhension et transfert (7), de préférence une grue à bras articulé, disposés sur le pont dudit navire, et
- à l'étape g), on actionne lesdites chenilles en position de dégagement relatif en section transversale dans un plan horizontal perpendiculaire à l'axe longitudinal vertical du mât de l'éolienne, position de dégagement dans laquelle une partie au moins des patins est déplacé par rapport aux autres, pour permettre l'éloignement du dispositif de maintenance par rapport au dit mât.

15. Procédé selon la revendication 14, **caractérisé en ce que** ladite partie du matériel au sommet de ladite éolienne est choisie parmi une pale (10c), une pièce mécanique d'actionnement en rotation des pales telle que rotor (10d), générateur électrique (10e) et nacelle (10b).

## Patentansprüche

1. Wartungsvorrichtung (1) für ein Offshore-Windrad (10), die dazu geeignet ist, sich gegen den Mast (10a) des Windrads anzulegen und sich entlang dessen zu bewegen, umfassend:
- eine Wartungsplattform (2), die einen Ausschnitt (2a) vorzugsweise in Form eines U umfasst, der zwei Arme (2a1, 2a2) begrenzt, die dazu geeignet sind, den Mast des Windrads (10) zu umgeben, auf solche Weise, dass der Mast des Windrads (10) in den Ausschnitt (2a) eintreten kann, wobei die vertikale Längsachse (XX') des Masts des Windrads senkrecht zur Arbeitsebene (2b) der oberen Oberfläche der Wartungsplattform steht, und
- Mittel zur Bewegung (3) der Wartungsplattform (2) entlang des Masts des Windrads (10a) in der axialen Längsrichtung (XX') des Masts des Windrads, umfassend eine Vielzahl von motorisierten Raupenketten (30), die unter der Wartungsplattform auf solche Weise angeordnet sind, dass, wenn der Mast des Windrads in dem Ausschnitt mit der vertikalen Längsachse des Masts des Windrads senkrecht zur Arbeitsebene (2b) der Wartungsplattform angeordnet ist, die Raupenketten (30), die Gleitbacken (30a) umfassen, dazu geeignet sind, sich gegen den Mast des Windrads anzulegen und sich entlang des Masts des Windrads zu bewegen.

2. Wartungsvorrichtung (1) für ein Offshore-Windrad (10) nach Anspruch 1, **dadurch gekennzeichnet, dass** die Mittel zur Bewegung (3) der Wartungsplattform n = 3 bis 6 Raupenketten (30) umfassen, die dazu geeignet sind, sich gegen den Mast des Windrads anzulegen, und im Querschnitt in einer horizontalen Ebene senkrecht zur vertikalen Längsachse (XX') des Masts des Windrads der Reihe nach regelmäßig voneinander beabstandet sind.

3. Wartungsvorrichtung (1) für ein Offshore-Windrad (10) nach einem der Ansprüche 1 oder 2, **dadurch gekennzeichnet, dass** eine Vielzahl der Raupenketten von zumindest einer Anordnung (31) einer Vielzahl von n Raupenketten-Stützelementen (31-1 - 31-6) gestützt wird, die jeweils eine solche Raupenkette (30) stützen, wobei die Raupenketten-Stützelemente (31-1 - 31-6) untereinander der Reihe nach auf gelenkige Weise durch drehende Gelenksvorrichtungen vom Scharniertyp (32) gemäß einer Drehachse verbunden sind, die senkrecht zur Arbeitsebene (2b) der Wartungsplattform steht, um zu erlauben, dass der Mast des Windrads durch die Raupenketten über einen Teil des Umfangs des Masts des Windrads umgeben wird, der im Querschnitt größer als ein halber Umfang ist, wenn die Raupenketten gegen den Mast angelegt sind.

4. Wartungsvorrichtung (1) für ein Offshore-Windrad (10) nach einem der Ansprüche 1 bis 3, **dadurch gekennzeichnet, dass** sie eine Vielzahl von p Anordnungen (31, 31a-31c) einer Vielzahl von n Raupenketten-Stützelementen (31-1 - 31-6) umfasst, die jeweils eine Raupenkette (30) stützen, wobei die p Anordnungen (31, 31a-31c) der Raupenketten-Stützelemente sowie die p Raupenketten-Stützelemente, die dieselbe Raupenkette stützen, voneinander der Reihe nach in der Richtung senkrecht zur Arbeitsebene (2b) der Wartungsplattform (2) beabstandet sind, wobei p vorzugsweise eine ganze Zahl von 2 bis 4 ist.

5. Wartungsvorrichtung (1) für ein Offshore-Windrad (10) nach einem der Ansprüche 1 bis 4, **dadurch gekennzeichnet, dass** die Raupenketten (30) Mittel zur Anlage (33, 33a-33c), die ein differenziertes radiales Auslenken der Raupenkette über die Länge zulassen, was ein Anlegen gegen und Bewegen um einen Umfang des Mastes des Windrads mit konischer Form erlaubt, wenn sie gegen den Mast angelegt sind, umfassen oder dazu geeignet sind, mit diesen zusammenzuwirken.

6. Wartungsvorrichtung (1) für ein Offshore-Windrad (10) nach Anspruch 5, **dadurch gekennzeichnet, dass** die Mittel zur Anlage (33, 33a-33c), die ein differenziertes radiales Auslenken der Raupenkette über die Länge zulassen, eine Vielzahl von p Zylindern umfassen, die auf den p Raupenketten-Stützelementen von jeweils p Anordnungen (31, 31a-31c) der Raupenketten-Stützelemente montiert sind, wobei die p Zylinder voneinander der Reihe nach in der Längsrichtung der Raupenkette beabstandet sind.

7. Wartungsvorrichtung (1) für ein Offshore-Windrad (10) nach einem der Ansprüche 1 bis 6, **dadurch gekennzeichnet, dass** sie zusätzliche Mittel zur Bewegung (4) umfasst, die Seilrollen (4a), Seile (4b) und Windenvorrichtungen (4c) umfassen, die dazu geeignet sind, die Bewegung der Wartungsplattform entlang des Masts des Windrads (10a) in der axialen Längsrichtung (XX') des Masts des Windrads zu erlauben.

8. Wartungsvorrichtung (1) für ein Offshore-Windrad (10) nach einem der Ansprüche 1 bis 6, **dadurch gekennzeichnet, dass** sie erste Mittel zum Greifen und Übertragen (4-1) umfasst, die vorzugsweise einen ersten Gelenkarm-Kran umfassen und auf der Wartungsplattform (2) angeordnet und dazu geeignet sind, das Ergreifen, das Anheben und die Bewegung eines Teils des Materials (10c-10e) an der Spitze des Windrads von der Spitze des Windrads bis zu der Wartungsplattform sicherzustellen, wenn die Wartungsvorrichtung (1) sich in einer Position oben gegen den Mast des Windrads (10a) befindet.

9. Schiff (100) für die Wartung eines Windrads, das mit einer Wartungsvorrichtung (1) für ein Offshore-Windrad (10) nach einem der Ansprüche 1 bis 8 ausgerüstet ist und vorzugsweise aus einem einfachen Wartungsschiff besteht, das dazu geeignet ist, rasch mobilisiert zu werden, wobei das Wartungsschiff **dadurch gekennzeichnet ist, dass** es ferner zweite Mittel zum Greifen und Übertragen (5) umfasst, die auf der Brücke (100a) des Schiffs angeordnet und dazu geeignet sind, die Wartungsvorrichtung (1) von der Brücke des Schiffs bis zu einer Position unten an einem Mast eines Offshore-Windrads zu übertragen, auf solche Weise, dass der Mast des Windrads (10a) mit der vertikalen Längsachse des Masts des Windrads senkrecht zur Arbeitsebene (2b) der oberen Oberfläche der Wartungsplattform in dem Ausschnitt (2a) positioniert werden kann, wenn das Schiff sich in der Nähe des Windrads befindet.

10. Wartungsschiff nach Anspruch 9, **dadurch gekennzeichnet, dass** die zweiten Mittel zum Greifen und Übertragen (5) der Wartungsvorrichtung eine Stampfkompensationsplattform (6), die dazu geeignet ist, zu erlauben, dass ein konstantes Niveau in der vertikalen Richtung der Wartungsvorrichtung (1) im Fall einer Stampfbewegung des Schiffs in Verbindung mit den Bewegungen des Meers gehalten wird, umfassen oder mit dieser zusammenwirken.

11. Schiff für die Wartung eines Windrads nach Anspruch 10, **dadurch gekennzeichnet, dass** die zweiten Mittel zum Greifen und Übertragen (5) Mittel zum Anheben (5a-5b), vorzugsweise einen durch einen Zylinder (5b) betätigbaren Gelenkarm-Kran (5a), umfassen, wobei die Mittel zum Anheben dazu geeignet sind, durch Verschiebung auf der Kompensationsplattform (6), auf welcher sie ruhen, bewegt zu werden, wobei die Kompensationsplattform zumindest einen Verschubbalken (6a1, 6a2) und zumindest zwei Kompensationszylinder (6b1, 6b2) umfasst, die dazu geeignet sind, im Fall einer Stampfbewegung des Schiffs in Verbindung mit den Bewegungen des Meers ein konstantes Niveau in der vertikalen Richtung des Verschubbalkens zu halten.

12. Schiff für die Wartung eines Windrads nach einem der Ansprüche 9 bis 11, **dadurch gekennzeichnet, dass** es ferner dritte Mittel zum Greifen und Übertragen (7), vorzugsweise einen Gelenkarm-Kran, umfasst, die auf der Brücke des Schiffs angeordnet und dazu geeignet sind, das Ergreifen, das Anheben und das Bewegen eines Teils des Materials (10c-10e) des Windrads, das zu reparieren oder auszutauschen ist, von der Wartungsplattform bis zu der Brücke (100a) des Wartungsschiffs sicherzustellen, wenn sich die Wartungsvorrichtung in einer Position unten gegen den Mast des Windrads in der Nähe des Schiffs befindet.

13. Verfahren zur Wartung eines Offshore-Windrads (10) mithilfe eines Wartungsschiffs (100) nach einem der Ansprüche 9 bis 12, **dadurch gekennzeichnet, dass** die folgenden Schritte der Reihe nach ausgeführt werden, wobei:
a) die Wartungsvorrichtung (1) auf solche Weise von dem Wartungsschiff bis zu dem Mast des Windrads (10a) übertragen wird, dass der Mast des Windrads sich in dem Ausschnitt (2a) zwischen den zwei Armen (2a1, 2a2) positioniert findet, mit der vertikalen Längsachse des Masts des Windrads senkrecht zur Arbeitsebene (2b) der oberen Oberfläche der Wartungsplattform, wobei die Raupenketten (30) in einer ausgerückten Position sind, in welcher zumindest ein Teil der Gleitbacken (30a) in Bezug auf die anderen bewegt wird, um die Annäherung und die Positionierung der Wartungsvorrichtung in Bezug auf den Mast zu erlauben, und
b) die Raupenketten (30) gegen den Mast des Windrads angelegt werden, und
c) die Mittel zur Bewegung (3) der Wartungsplattform auf solche Weise betätigt werden, dass die Wartungsplattform (2) entlang des Masts des Windrads (10a) in der axialen Längsrichtung (XX') des Masts des Windrads zu der Spitze des Windrads hin angehoben wird, und
d) die Wartung des Windrads von der Wartungsplattform aus durchgeführt wird, und
e) die Mittel zur Bewegung (3) auf solche Weise betätigt werden, dass die Wartungsplattform (2) entlang des Masts des Windrads (10a) in der axialen Längsrichtung (XX') des Masts des Windrads zu der Basis des Windrads hin wieder abgesenkt wird, und
f) der Teil des Materials (10c-10e) des Windrads von der Wartungsplattform (2) bis zu der Brücke eines Schiffs, vorzugsweise der Brücke (100a) des Wartungsschiffs (100), übertragen wird, wenn die Wartungsvorrichtung (1) sich in einer Position unten gegen den Mast des Windrads (10a) in der Nähe des Wartungsschiffs (100) befindet, und
g) die Raupenketten (30) von ihrer Position in Anlage gegen den Mast des Windrads zu einer ausgerückten Position hin betätigt werden, in welcher zumindest ein Teil der Gleitbacken in Bezug auf die anderen bewegt wird, um das Entfernen der Wartungsvorrichtung in Bezug auf den Mast zu erlauben.

14. Verfahren nach Anspruch 13, **dadurch gekennzeichnet, dass**:
- in Schritt a) die Wartungsvorrichtung durch Verschiebung mithilfe der zweiten Mittel zum Greifen und Übertragen (5) angehoben und bewegt wird, die Mittel zum Anheben (5a-5b), vorzugsweise einen durch einen Zylinder (5b) betätigbaren Gelenkarm-Kran (5a) umfassen, wobei die Mittel zum Anheben durch Verschiebung auf einer Kompensationsplattform (6), auf welcher sie ruhen, bewegt werden, wobei die Kompensationsplattform zumindest einen Verschubbalken (6a1, 6a2) und zumindest zwei Kompensationszylinder (6b1, 6b2) umfasst, die dazu geeignet sind, im Fall einer Stampfbewegung des Schiffs in Verbindung mit den Bewegungen des Meers ein konstantes Niveau in der vertikalen Richtung des Verschubbalkens zu halten, und
- in Schritt b) die Raupenketten von einer ausgerückten Position zu einer angenäherten relativen Position hin im Querschnitt in einer horizontalen Ebene senkrecht zur vertikalen Längsachse des Masts des Windrads betätigt werden, um eine Anlage aller Gleitbacken (30a) der Raupenketten gegen den Mast des Windrads zu schaffen, um die Bewegung durch Verschiebung entlang des Masts zu erlauben, sobald die Drehung der Raupenketten in Schritt c) betätigt wird,
- in Schritt d) ein Teil des Materials (10c-10e) an der Spitze des Windrads vorzugsweise mithilfe der ersten Mittel zum Greifen und Übertragen (4-1), die auf der Wartungsplattform (2) angeordnet sind, auf der Wartungsplattform abgelegt wird, um es zu reparieren oder auszutauschen, wenn die Wartungsvorrichtung (1) sich in einer Position oben gegen den Mast des Windrads (10a) befindet, und
- in Schritt f) der Teil des Materials (10c-10e) des Windrads mithilfe der dritten Mittel zum Greifen und Übertragen (7), vorzugsweise einem Gelenkarm-Kran, die auf der Brücke des Schiffs angeordnet sind, von der Wartungsplattform (2) bis zu der Brücke eines Schiffs, vorzugsweise der Brücke (100a) des Wartungsschiffs (100), übertragen wird, und
- in Schritt g) die Raupenketten in eine ausgerückte relative Position im Querschnitt in einer horizontalen Ebene senkrecht zur vertikalen Längsachse des Masts des Windrads betätigt werden, in welcher zumindest ein Teil der Gleitbacken in Bezug auf die anderen bewegt wird, um das Entfernen der Wartungsvorrichtung in Bezug auf den Mast zu erlauben.

15. Verfahren nach Anspruch 14, **dadurch gekennzeichnet, dass** der Teil des Materials an der Spitze des Windrads aus einem Flügel (10c), einem mechanischen Flügeldrehantriebsteil wie einem Rotor (10d), einem elektrischen Generator (10e) und einer Gondel (10b) ausgewählt wird.

## Claims

1. A maintenance device (1) for maintaining an offshore wind turbine (10), the device being suitable for pressing against and traveling along the pylon (10a) of the wind turbine, and comprising:
- a maintenance platform (2) including a notch (2a), preferably an U-shaped notch (2a) defining two branches (2a1, 2a2) suitable for placing on either side of the pylon of the wind turbine (10) so that the pylon of the wind turbine (10) can penetrate into said notch (2a) with the vertical longitudinal axis (XX') of the pylon of the wind turbine being perpendicular to a work plane (2b) of a top surface of said maintenance platform; and
- travel means (3) for causing said maintenance platform (2) to travel along the pylon (10a) of the wind turbine in the vertical longitudinal axial direction (XX') of the pylon of the wind turbine, the travel means comprising a plurality of motor-driven crawlers (30) arranged under said maintenance platform so that when the pylon of the wind turbine is placed in said notch with the vertical longitudinal axis of the pylon of the wind turbine perpendicular to the work plane (2b) of said maintenance platform, said crawlers (30) having tracks (30a) are suitable for pressing against said pylon of the wind turbine and traveling along the pylon of the wind turbine.

2. A maintenance device (1) for an offshore wind turbine (10) according to claim 1, **characterized in that** said travel means (3) of said maintenance platform comprises a plurality of n=3 to 6 crawlers (30) arranged to press against said pylon of the wind turbine while being regularly spaced apart from one another in succession in cross-section in an horizontal plane perpendicular to the vertical longitudinal axis (XX') of the pylon of the wind turbine.

3. A maintenance device (1) for an offshore wind turbine (10) according to claim 1 or 2, **characterized in that** a plurality of said crawlers are supported by at least one set (31) of a plurality n of crawler support elements (31-1-31-6), each supporting a respective one of said crawlers (30), said crawler support elements (31-1-31-6) being connected to one another in succession in hinged manner by swivel articulation devices of the type having a hinge (32) about a swivel axis perpendicular to the work plane (2b) of the maintenance platform in order to enable the pylon of the wind turbine to be surrounded by said crawlers over a fraction of the circumference of the pylon of the wind turbine that is greater than half its circumference in cross-section when said crawlers are pressed against said pylon.

4. A maintenance device (1) for an offshore wind turbine (10) according to any one of claims 1 to 3, **characterized in that** it comprises a plurality p of sets (31, 31a-31c) each of a plurality n of crawler support elements (31-1-31-6) each set supporting a respective said crawler (30), said p sets (31, 31a-31c) of said crawler support elements and said p said crawler support elements supporting a given crawler being spaced apart from one another in succession in the direction perpendicular to said work plane (2b) of said maintenance platform (2), p preferably being an integer in the range 2 to 4.

5. A maintenance device (1) for an offshore wind turbine (10) according to any one of claims 1 to 4, **characterized in that** said crawlers (30) include or are suitable for co-operating with presser means (33, 33a-33c) enabling each of said crawlers to be moved in a radial direction differentially along its length so as to enable them to press against and travel along a periphery of conical shape of said pylon of the wind turbine when they are pressed against said pylon.

6. A maintenance device (1) for an offshore wind turbine (10) according to claim 5, **characterized in that** said presser means (33, 33a-33c) allowing each said crawler to be moved radially in different manner along its length comprise a plurality p of actuators mounted on the said crawler support elements of respective ones of the p sets (31, 31a-31c) of said crawler support elements, said p actuators being spaced apart from one another in succession in the longitudinal direction of said crawler.

7. A maintenance device (1) for an offshore wind turbine (10) according to any one of claims 1 to 6, **characterized in that** it includes additional travel means (4) comprising sheaves (4a), cables (4b), and winch devices (4c) suitable for enabling said maintenance platform to travel along the pylon (10a) of the wind turbine in the vertical longitudinal axial direction (XX') of the pylon of the wind turbine.

8. A maintenance device (1) for an offshore wind turbine (10) according to any one of claims 1 to 6, **characterized in that** it includes first grip and transfer means (4-1) preferably comprising a first articulated-jib crane, which means are mounted on said maintenance platform (2) and are suitable for gripping, lifting, and moving a portion of the equipment (10c-10e) at the top of said wind turbine from the top of the wind turbine onto said maintenance platform when the maintenance device (1) is in a high position against the pylon (10a) of the wind turbine.

9. A wind turbine maintenance ship (100) fitted with a maintenance device (1) according to any one of claims 1 to 8, for maintaining an offshore wind turbine (10), the ship preferably consisting in a single service ship suitable for being mobilized quickly, said maintenance ship being **characterized in that** it further includes second grip and transfer means (5) arranged on a deck (100a) of the ship and suitable for transferring the maintenance device (1) from the deck of the ship into a low position of a pylon of an offshore wind turbine such that the pylon (10a) of the wind turbine can be positioned in said notch (2a) with the vertical longitudinal axis of the pylon of the wind turbine being perpendicular to the work plane (2b) of the top surface of said maintenance platform, when said ship is in the proximity of said wind turbine.

10. A maintenance ship according to claim 9, **characterized in that** said second grip and transfer means (5) of the maintenance device comprise or co-operate with a heave compensation platform (6) suitable for keeping said maintenance device (1) at a constant level in the vertical direction in the event of said ship being subjected to heave motion associated with movements of the sea.

11. A wind turbine maintenance ship according to claim 10, **characterized in that** said second grip and transfer means (5) include lift means (5a, 5b), preferably an articulated-jib crane (5a) actuatable by an actuator (5b), said lift means being suitable for being moved in translation on said compensation platform (6) on which they rest, said compensation platform comprising at least one slide beam (6a1, 6a2) and at least two compensation actuators (6b1, 6b2) suitable for keeping said slide beam at a constant level in the vertical direction in the event of said ship being subjected to heave motion associated with movements of the sea.

12. A wind turbine maintenance ship according to any one of claims 9 to 11, **characterized in that** it further includes third grip and transfer means (7), preferably an articulated-jib crane, arranged on the deck of the ship and suitable for gripping, lifting, and moving a portion of the equipment (10c-10e) of said wind turbine that is to be repaired or replaced, from said maintenance platform onto the deck (100a) of said maintenance ship when the maintenance device is in the low position against the pylon of the wind turbine in the proximity of said ship.

13. A method of maintaining an offshore wind turbine (10) using a maintenance ship (100) according to any one of claims 9 to 12, the method being **characterized in that** it comprises the following successive steps:
a) transferring said maintenance device (1) from said maintenance ship to the pylon (10a) of the wind turbine so that the pylon of the wind turbine is positioned in said notch (2a) between said two branches (2a1, 2a2), with the vertical longitudinal axis of the pylon of the wind turbine perpendicular to the work plane (2b) of the top surface of said maintenance platform, said crawlers (30) being in a disengaged position in which at least some of the tracks (30a) are moved away from the others so as to enable the maintenance device to be brought up to and positioned relative to said pylon; and
b) pressing said crawlers (30) against said pylon of the wind turbine; and
c) actuating said travel means (3) of said maintenance platform so as to cause said maintenance platform (2) to climb up the pylon (10a) of the wind turbine along the vertical longitudinal axial direction (XX') of the pylon of the wind turbine towards the top of the wind turbine; and
d) performing maintenance of the wind turbine from said maintenance platform; and
e) actuating said travel means (3) so as to cause said maintenance platform (2) to travel back down along the pylon (10a) of the wind turbine along the vertical longitudinal direction (XX') of the pylon of the wind turbine towards the bottom of the wind turbine; and
f) transferring said portion of the equipment (10c-10e) of the wind turbine from said maintenance platform (2) onto the deck of a ship, preferably the deck (100a) of said maintenance ship (100), once the maintenance device (1) is in a low position against the pylon (10a) of the wind turbine in the proximity of said maintenance ship (100); and
g) actuating said crawlers (30) from their position pressing against said pylon of the wind turbine towards a disengaged position in which at least a fraction of the tracks are moved relative to the others so as to enable the maintenance device to be moved away from said pylon.

14. A method according to claim 13, **characterized in that**:
- in step a), the maintenance device is lifted and moved in translation using second grip and transfer means (5) comprising lift means (5a-5b), preferably an articulated-jib crane (5a) actuatable by an actuator (5b), said lift means being moved in translation on a compensation platform (6) on which they rest, said compensation platform comprising at least one slide beam (6a1, 6a2) and at least two compensation actuators (6b1, 6b2) suitable for keeping said slide beam at a constant level in the vertical direction in the even of said ship being subjected to heaving motion associated with movements of the sea; and
- in step b), said crawlers are actuated from a disengaged position towards a relative approach position in cross-section in a horizontal plane perpendicular to the vertical longitudinal axis of the pylon of the wind turbine so as to cause all of the tracks (30a) of said crawlers to press against said pylon of the wind turbine in order to make possible travel in translation along the pylon once the crawlers are actuated to rotate in step c) ;
- in step d), once the maintenance device (1) is in a high position against the pylon (10a) of the wind turbine, removing a portion of the equipment (10c-10e) at the top of said wind turbine and placing it on said maintenance platform in order to be repaired or replaced, preferably using first grip and transfer means (4-1) arranged on said maintenance platform (2); and
- in step f), transferring said portion of the equipment (10c-10e) of the wind turbine from said maintenance platform (2) onto the deck of a ship, preferably the deck (100a) of said maintenance ship (100), using third grip and transfer means (7), preferably an articulated-jib crane, arranged on the deck of said ship; and
- in step g), actuating said crawlers into a relatively disengaged position in cross-section in a horizontal plane perpendicular to the vertical longitudinal axis of the pylon of the wind turbine, in which disengaged position at least some of the tracks are moved relative to the others so to enable the maintenance device to be moved away from said pylon.

15. A method according to claim 14, **characterized in that** said portion of the equipment at the top of said wind turbine is selected from a blade (10c), a mechanical part for actuating blades in rotation such as a rotor (10d), an electricity generator (10e), and a nacelle (10b).
